# EUROPEAN PATENT SPECIFICATION

(11) **EP 3 068 070 B1**
(45) Date of publication and mention of the grant of the patent: **07.08.2019**
(21) Application number: 14865957.6
(22) Date of filing: 13.05.2014
(51) Int. Cl.: H04L 12/18, H04L 12/58, H04L 29/06, G06Q 10/10

(54) **METHOD AND DEVICE FOR INITIATING NETWORK CONFERENCE**
VERFAHREN UND VORRICHTUNG ZUR INITIIERUNG VON NETZWERKKONFERENZEN
PROCÉDÉ ET DISPOSITIF PERMETTANT D'ORGANISER UNE CONFÉRENCE EN RÉSEAU

(30) Priority: 29.11.2013 CN 201310632759
(43) Date of publication of application: 14.09.2016
(73) Proprietor: Huawei Technologies Co., Ltd., Longgang District Shenzhen, Guangdong 518129 (CN)
(72) Inventor: YING, Yifeng, Shenzhen Guangdong 518129 (CN)
(74) Representative: Kreuz, Georg Maria
(86) International application number: PCT/CN2014/077357
(87) International publication number: WO 2015/078150

(56) References cited:
- WO-A1-2013/034186
- CN-A- 102 404 286
- CN-A- 102 884 758
- CN-A- 103 326 926
- KR-A- 20020 071 251
- US-A1- 2010 312 836
- US-A1- 2013 204 949

## Description

### TECHNICAL FIELD

The present application relates to the field of data processing, and in particular, to a method and an apparatus for initiating a network conference.

### BACKGROUND

With continuous development of network technologies, a conventional conference mode is gradually replaced by a network conference mode. The network conference refers to an instant messaging process that is initiated by using a network and in which multiple user terminals participate.

In the prior art, a method for initiating a network conference is mainly that an initiator manually enters related information of the conference. The related information of the conference mainly includes participant address information, title information, and the like of the conference.

However, each time when a network conference is initiated, the foregoing related information of the conference needs to be manually entered, thereby causing low efficiency of initiating the network conference and occupying much time of the initiator.

WO2013034186A1 discloses a method for scheduling an audio or video conference at a conference application comprising the following steps: (i) receiving (21) from a terminal (12) having an e-mail program with in-person meeting scheduling and updating functionality (12a) installed therein, a meeting request e-mail comprising a subject, a scheduled date and time for the meeting, an identification of the sender (11) of the meeting request e-mail, and the identification of at least a further recipient of the meeting request e-mail, which recipient is invited to the audio or video conference; (ii) interpreting (22) the meeting request e-mail as a request to set up an audio or video conference at the scheduled date and time and with the sender and the at least one recipient as participants; (iii) providing (24) at least one Internet link address, telephone number, or other address via which the participants can access the audio or video conference; and (iv) preparing and sending (26) an update to the meeting request e-mail to the participants of the audio or video conference. The update comprises the subject, the scheduled date and time for the meeting, the at least one Internet link address, telephone number, or other address, and the identification of the sender of the meeting request e-mail as an indication of the sender of the update.

US2010312836A1 discloses that users are enabled to traverse seamlessly between electronic mail and real time communications such as text messaging, group chats, and similar forms. A context of communications such as a history of the email exchange, attached or related documents, links, trail of exchanged text messages, and comparable information is used to automatically determine addressees for the communication form after the traverse and to provide context information.

US2013204949A1 discloses a method for launching a contextualized on-the-fly conference between at least two users connected to a unified communications client and whose respective email addresses are included in an email, which method includes the following steps: extracting the email addresses comprised within the email's header; extracting a context from the email; formatting a contextualized on-the-fly conference request with the help of the extracted email addresses and context; transmitting the formatted request to a conference server; opening, for each user, an instant messaging session via the unified communications client; loading the extracted context in the open instant messaging session.

### SUMMARY

An objective of the present application is to provide a method and an apparatus for initiating a network conference, so that related information of the conference can be automatically generated, which solves a problem that manual entering of the related information of the conference occupies much time of an initiator.

To achieve the foregoing objective, the present application provides the following solutions:
According to a first possible implementation manner of a first aspect of the present application, the present application provides a method for initiating a network conference, where the method includes:
acquiring, by a conference initiating terminal, mail information related to the network conference;
identifying, by the conference initiating terminal, sender address information, recipient address information, and mail title information in the mail information;
determining, by the conference initiating terminal, a sender address indicated by the sender address information as a first participant address of the network conference;
determining, by the conference initiating terminal, a recipient address indicated by the recipient address information as a second participant address of the network conference, wherein the conference initiating terminal is the first participant or the second participant;
determining, by the conference initiating terminal, a mail title indicated by the mail title information as a conference subject of the network conference; and
sending, by the conference initiating terminal, a conference reservation request to a conference reservation server, where the conference reservation request includes the conference subject, the first participant address and the second participant address, and the conference reservation request is used to request the conference reservation server to create the network conference and send a conference notification that includes the conference subject to the first participant address and the second participant address;
acquiring graphical and text information from a graph and text shared area in the network conference at the conference initiating terminal, wherein the graphical and text information comprises at least one of speech of a participant, text and image information displayed in the conference; and
uploading the graphical and text information to the conference reservation server, so that the conference reservation server sends a conference minute mail to the terminal participating in the network conference, where the conference minute mail includes a storage address of the graphical and text information on the conference reservation server.

With reference to a second possible implementation manner of the first aspect, after the sending a conference reservation request to a conference reservation server, the method further includes:
uploading the mail information to the conference reservation server, so that the first participant or the second participant acquires the mail information from the conference reservation server.

With reference to a first specific implementation manner of the second possible implementation manner of the first aspect, the sending a conference reservation request to a conference reservation server specifically includes:
sending a conference reservation request that includes a conference type identifier to the conference reservation server, where the conference type identifier is used to indicate that the network conference is initiated based on a mail, so that the conference reservation server sends the conference type identifier to the first participant and the second participant, and after the first participant or the second participant determines, according to the conference type identifier, that the network conference is initiated based on a mail, the first participant or the second participant performs a step of acquiring the mail information from the conference reservation server.

With reference to a second specific implementation manner of the second possible implementation manner of the first aspect, before the uploading the mail information to the conference reservation server, the method further includes:
identifying text information in the mail information;
determining text attribute information of the text information, where the text attribute information includes at least a font type, a font size, a font color, and a text location; and
converting a format of the text attribute information into a text attribute information format supported by software that bears the network conference.

With reference to a third specific implementation manner of the second possible implementation manner of the first aspect, before the uploading the mail information to the conference reservation server, the method further includes:
identifying graphical information in the mail information;
determining graph attribute information of the graphical information, where the graph attribute information includes at least a graph type, a graph size, and a graph location; and
converting a format of the graph attribute information into a graph attribute information format supported by software that bears the network conference.

With reference to any one specific implementation manner of the five possible implementation manners of the first aspect, before the acquiring graphical and text information from a graph and text shared area in the network conference, the method further includes:
loading the mail information into the graph and text shared area, so that the first participant or the second participant modifies, by using an annotation function of the graph and text shared area, mail content corresponding to the mail information.

According to a first possible implementation manner of a second aspect of the present application, the present application provides an apparatus for initiating a network conference, where the apparatus includes:
an acquiring unit, configured to acquire mail information related to the network conference;
an identifying unit, configured to identify sender address information, recipient address information, and mail title information in the mail information;
a determining unit, configured to determine a sender address indicated by the sender address information as a first participant address of the network conference;
further configured to determine a recipient address indicated by the recipient address information as a second participant address of the network conference; and
further configured to determine a mail title indicated by the mail title information as a conference subject of the network conference; and
a sending unit, configured to send a conference reservation request to a conference reservation server, where the conference reservation request includes the conference subject, the first participant address and the second participant address, and the conference reservation request is used to request the conference reservation server to create the network conference and send a conference notification that includes the conference subject to the first participant address and the second participant address;
the acquiring unit is further configured to:
acquire graphical and text information from a graph and text shared area in the network conference at the conference initiating terminal, wherein the graphical and text information comprises at least one of speech of a participant, text and image information displayed in the conference; and
the sending unit is further configured to upload the graphical and text information to the conference reservation server, so that the conference reservation server sends a conference minute mail to the first participant and the second participant, wherein the conference minute mail comprises a storage address of the graphical and text information on the conference reservation server.

With reference to a second possible implementation manner of the second aspect, the sending unit is further configured to:
after sending the conference reservation request to the conference reservation server, upload the mail information to the conference reservation server, so that the first participant or the second participant acquires the mail information from the conference reservation server.

With reference to a first specific implementation manner of the second possible implementation manner of the second aspect, the sending unit is specifically configured to:
send a conference reservation request that includes a conference type identifier to the conference reservation server, where the conference type identifier is used to indicate that the network conference is initiated based on a mail, so that the conference reservation server sends the conference type identifier to the first participant and the second participant, and after the first participant or the second participant determines, according to the conference type identifier, that the network conference is initiated based on a mail, the first participant or the second participant performs a step of acquiring the mail information from the conference reservation server.

With reference to a second specific implementation manner of the second possible implementation manner of the second aspect, the identifying unit is further configured to:
before the mail information is uploaded to the conference reservation server, identify text information in the mail information;
the determining unit is further configured to determine text attribute information of the text information, where the text attribute information includes at least a font type, a font size, a font color, and a text location; and
the apparatus further includes:
   a first converting unit, configured to convert a format of the text attribute information into a text attribute information format supported by software that bears the network conference.

With reference to a third specific implementation manner of the second possible implementation manner of the second aspect, the identifying unit is specifically configured to:
before the mail information is uploaded to a server that is configured to process the network conference, identify graphical information in the mail information;
the determining unit is further configured to determine graph attribute information of the graphical information, where the graph attribute information includes at least a graph type, a graph size, and a graph location; and
the apparatus further includes:
   a second converting unit, configured to convert a format of the graph attribute information into a graph attribute information format supported by software that bears the network conference.

With reference to any one specific implementation manner of the five possible implementation manners of the second aspect, the apparatus further includes:
a loading unit, configured to, before the graphical and text information is acquired from the graph and text shared area in the network conference, load the mail information into the graph and text shared area, so that the first participant or the second participant modifies, by using an annotation function of the graph and text shared area, mail content corresponding to the mail information.

According to a first possible implementation manner of a third aspect of the present application, the present application provides a system for initiating network conference, where the system includes a conference initiating terminal and a conference reservation server, where
the conference initiating terminal is configured to: acquire mail information related to the network conference,
identify sender address information, recipient address information, and mail title information in the mail information,
determine a sender address indicated by the sender address information as a first participant address of the network conference,
determine a recipient address indicated by the recipient address information as a second participant address of the network conference,
determining a mail title indicated by the mail title information as a conference subject of the network conference, and
send a conference reservation request to a conference reservation server, where the conference reservation request includes the conference subject, the first participant address and the second participant address; and
the conference reservation server is configured to, after receiving the conference reservation request, create the network conference and send a conference notification that includes the conference subject to the first participant address and the second participant address;
wherein the conference initiating terminal is further configured to:
after sending the conference reservation request to the conference reservation server, acquire graphical and text information from a graph and text shared area in the network conference at the conference initiating terminal, wherein the graphical and text information comprises at least one of speech of a participant, text and image displayed in the conference, and upload the graphical and text information to the conference reservation server; and
the conference reservation server is further configured to send a conference minute mail to the first participant and the second participant, wherein the conference minute mail comprises a storage address of the graphical and text information on the conference reservation server.

With reference to a second possible implementation manner of the third aspect, the conference initiating terminal is further configured to, after sending the conference reservation request to the conference reservation server, upload the mail information to the conference reservation server; and
the first participant or the second participant participating in the network conference is configured to acquire the mail information from the conference reservation server.

With reference to a first specific implementation manner of the second possible implementation manner of the third aspect, the conference initiating terminal is specifically configured to send a conference reservation request that includes a conference type identifier to the conference reservation server, where the conference type identifier is used to indicate that the network conference is initiated based on a mail;
the conference reservation server is further configured to send the conference type identifier to the terminal participating in the network conference; and
the terminal of the network conference is further configured to, after it is determined, according to the conference type identifier, that the network conference is initiated based on a mail, perform a step of acquiring the mail information from the conference reservation server.

According to specific embodiments provided in the present application, the present application discloses the following technical effects:
According to the method or the apparatus for initiating a network conference disclosed in the present application, the sender address indicated by the sender address information is determined as the first participant address of the network conference; the recipient address indicated by the recipient address information is determined as the second participant address of the network conference; and the mail title indicated by the mail title information is determined as the conference subject of the network conference. Therefore, information related to the network conference may be automatically generated, so that an initiator of the network conference does not need to manually enter participant address information and title information of the network conference, thereby improving efficiency of initiating the network conference.

### BRIEF DESCRIPTION OF DRAWINGS

To describe the technical solutions in the embodiments of the present application or in the prior art more clearly, the following briefly introduces the accompanying drawings required for describing the embodiments. Apparently, the accompanying drawings in the following description show merely some embodiments of the present application, and a person of ordinary skill in the art may still derive other drawings from these accompanying drawings without creative efforts.
FIG. 1 is a flowchart of Embodiment 1 of a method for initiating a network conference according to the present application;
FIG. 2 is a flowchart of Embodiment 2 of a method for initiating a network conference according to the present application;
FIG. 3 is a structural diagram of Embodiment 1 of an apparatus for initiating a network conference according to the present application;
FIG. 4 is a structural diagram of an embodiment of a system for initiating a network conference according to the present application; and
FIG. 5 is a structural diagram of a computing node according to the present application.

### DESCRIPTION OF EMBODIMENTS

The following clearly and completely describes the technical solutions in the embodiments of the present application with reference to the accompanying drawings in the embodiments of the present application. Apparently, the described embodiments are merely some but not all of the embodiments of the present application. All other embodiments obtained by a person of ordinary skill in the art based on the embodiments of the present application without creative efforts shall fall within the protection scope of the present application.

To make the objectives, characteristics, and advantages of the present application clearer to understand, the following further describes the present application in detail with reference to the accompanying drawings and specific implementation manners.

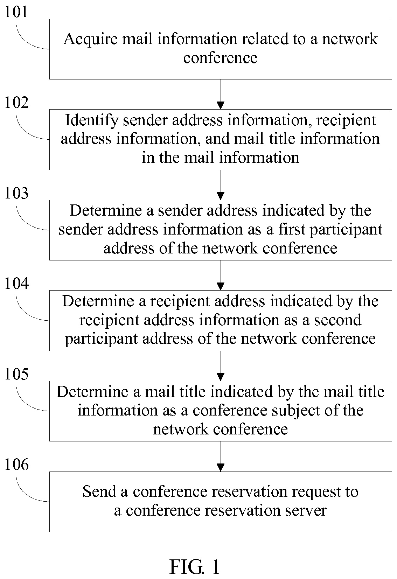

FIG. 1 is a flowchart of Embodiment 1 of a method for initiating a network conference according to the present application. As shown in FIG. 1, the method may include:
Step 101: Acquire mail information related to the network conference.

The network conference in this embodiment of the present application may be initiated for a mail. Information included in the mail related to the network conference may be referred to as mail information related to the network conference.

The mail information related to the network conference may include sender address information, recipient address information, mail title information, mail text information, and the like.

Step 102: Identify the sender address information, the recipient address information, and the mail title information in the mail information.

Step 103: Determine a sender address indicated by the sender address information as a first participant address of the network conference.

There may be multiple participants in the network conference. Generally, a sender of the mail related to the network conference must be included in these participants. Therefore, the sender address indicated by the sender address information may be determined as the first participant address of the network conference. The sender address may be an email box of the sender.

Step 104: Determine a recipient address indicated by the recipient address information as a second participant address of the network conference.

There may be multiple participants in the network conference. Generally, a recipient of the mail related to the network conference must also be included in these participants. Therefore, the recipient address indicated by the recipient address information may be determined as the second participant address of the network conference. The recipient address may be an email box of the recipient.

Step 105: Determine a mail title indicated by the mail title information as a conference subject of the network conference.

Because the network conference may be a discussion initiated for a related mail, a title of the related mail may also be used as a conference subject of the network conference. Therefore, the mail title indicated by the mail title information may be determined as the conference subject of the network conference.

Step 106: Send a conference reservation request to a conference reservation server, where the conference reservation request includes the conference subject, the first participant address and the second participant address. The conference reservation request is used to request the conference reservation server to create the network conference and send a conference notification that includes the conference subject to the first participant address and the second participant address.

The conference reservation request may be sent to the conference reservation server. The conference reservation server may send, according to the first participant address and the second participant address, the conference notification to a first terminal corresponding to the first participant address and a second terminal corresponding to the second participant address, so as to notify the first terminal and the second terminal to participate in the network conference.

The conference notification may include the conference subject, and after receiving this conference notification, the first terminal and the second terminal may display the conference subject on a local display unit, to prompt a user for the subject of the conference.

In conclusion, in this embodiment, the sender address indicated by the sender address information is determined as the first participant address of the network conference, the recipient address indicated by the recipient address information is determined as the second participant address of the network conference, and the mail title indicated by the mail title information is determined as the conference subject of the network conference. Therefore, information related to the network conference may be automatically generated, so that an initiator of the network conference does not need to manually enter participant address information and title information of the network conference, thereby improving efficiency of initiating the network conference.

It should be noted that, in the method in this embodiment, after the first participant address and the second participant address are determined, the user may further manually modify a participant address, so as to add an address of another participant that needs to participate in the network conference. After the conference subject is determined, the user may also manually modify the conference subject.

In an actual application, the network conference is initiated for the mail information; therefore, the mail information needs to be shared among participants of the network conference, so that the participants can learn the mail information. In order to share the mail information, after the conference reservation request is sent to the conference reservation server, the method may further include the following step:
Upload the mail information to the conference reservation server, so that a terminal participating in the network conference acquires the mail information from the conference reservation server.

Specifically, the sending a conference reservation request to a conference reservation server may include:
sending a conference reservation request that includes a conference type identifier to the conference reservation server, where the conference type identifier is used to indicate that the network conference is initiated based on a mail, so that the conference reservation server sends the conference type identifier to the terminal participating in the network conference, and after the terminal participating in the network conference determines, according to the conference type identifier, that the network conference is initiated based on a mail, the terminal performs a step of acquiring the mail information from the conference reservation server.

After receiving the conference type identifier, the terminal participating in the network conference may determine, according to the conference type identifier, that the network conference is initiated based on a mail, and then may download the mail information from the conference reservation server; and the mail information may be displayed on the terminal participating in the network conference. For example, text content of the mail information may be displayed on the participant terminal, so that the participant of the network conference may directly and quickly learn content of the conference.

The conference reservation server may also send a URL that stores the mail information to the terminal participating in the network conference, and the terminal downloads the mail information from the conference reservation server by using the URL.

In a specific implementation manner, after the conference reservation server receives the conference reservation request that includes the conference type identifier, the conference type identifier and the URL that stores the mail information are carried in the sent conference notification; and a terminal that receives the conference notification determines, according to the conference type identifier, that the network conference is initiated based on a mail, and then may download the mail information from the conference reservation server by using the URL.

In another specific implementation manner, a terminal that receives the conference notification sends a conference participation request to the conference reservation server. After receiving the conference participation request, the conference reservation server sends the conference type identifier and the URL that stores the mail information to the conference terminal; and the conference terminal determines, according to the conference type identifier, that the network conference is initiated based on a mail, and then may download the mail information from the conference reservation server by using the URL.

In an actual application, in order that an attribute of the mail information displayed on the participant terminal is consistent with an attribute of text information in the original mail information, before the mail information is uploaded to a server that is configured to process the network conference, the method may further include the following steps:
Identify the text information in the mail information.

Determine text attribute information of the text information, where the text attribute information includes at least a font type, a font size, a font color, and a text location. Convert a format of the text attribute information into a text format supported by software that bears the network conference. The text format supported by the software that bears the network conference may be a whiteboard format.

In an actual application, in order that an attribute of the mail information displayed on the participant terminal is consistent with an attribute of graphical information in the original mail information, before the mail information is uploaded to a server that is configured to process the network conference, the method may further include the following steps:
Identify graphical information in the mail information.

Determine graph attribute information of the graphical information, where the graph attribute information includes at least a graph type, a graph size, and a graph location. Convert a format of the graph attribute information into a graph format supported by software that bears the network conference (for example, a whiteboard format).

In an actual application, in order to generate a conference minute according to the content of the network conference so that the content of the network conference can be viewed later, after the conference notification that includes the conference subject is sent to the first participant address and the second participant address, the method may further include the following steps:
Acquire graphical and text information from a graph and text shared area in the network conference.

Upload the graphical and text information to the server.

Send a conference minute mail to the participant terminal, where the conference minute mail includes a storage address of the graphical and text information on the server.

The graph and text shared area may also be referred to as a whiteboard. In the network conference, both speech of a participant and text and graphical information displayed in the conference may be displayed in the graph and text shared area. Therefore, the text and graphical information may be used as the conference minute of the network conference. In specific implementation, the terminal participating in the conference may load, on the whiteboard, mail information whose format is converted into a whiteboard format, and participants have a discussion about mail content. During the conference, the participant may modify the mail information by using a whiteboard annotation function and use modified mail information as the conference minute.

It should be noted that, the conference minute mail includes the storage address of the graphical and text information on the server, but not the graphical and text information. A data volume occupied by the storage address is far smaller than a data volume of the graphical and text information. Therefore, sending the conference minute mail that includes the storage address may further reduce a data volume of the conference minute mail, which avoids network congestion caused by transmission of a large volume of data.

In an actual application, a user corresponding to a participant terminal may be absent from the network conference due to a reason. Therefore, sending the conference minute mail to the participant terminal who is absent from the network conference may make the user who is absent from the network conference learn the conference content of the network conference.

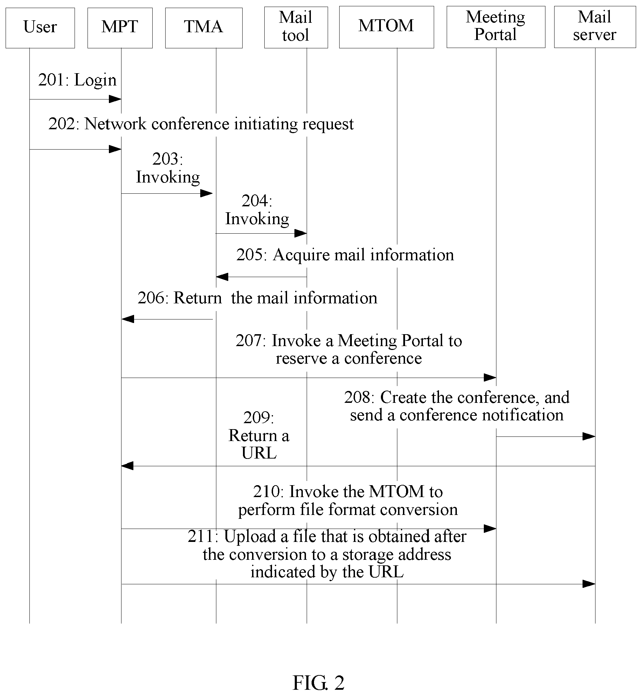

FIG. 2 is a flowchart of Embodiment 2 of a method for initiating a network conference according to the present application. As shown in FIG. 2, the method may include: Step 201: A user logs in to meeting productivity tools (Meeting Productivity Tools, MPT) software.

MPT is software that can execute the method of the present application. When using the MPT for the first time, information related to the network conference may be configured, where the related information may include an IP address and a port number of a conference reservation server; and a default conference parameter may further be created, where the default conference parameter includes but is not limited to a default quantity of conference participants, conference duration information, a conference mode (a host mode or a free mode), and the like.

Step 202: The user initiates a network conference initiating request that is based on mail information.

The user may initiate the request by clicking a "conference reservation" plug-in button on a mail page.

Step 203: The MPT invokes a third-party mail system adaptation unit (Third mail adapter, TMA) interface, so as to acquire related information in a mail, where the related information includes a mail sender field, a mail recipient field, a mail title, and mail text.

The TMA is a module defined in the present application, and may be configured to: shield a difference between bottom mail systems; acquire information such as a sender, a subject, and mail content of a mail; and send the information to the MPT. The MPT automatically fills the foregoing information into a conference reservation page. The user may rapidly initiate the network conference by using the foregoing information, or the user may reserve the conference after modifying a part of the information.

Step 204: The TMA invokes an interface of a mail tool according to a type of the mail tool.

The mail tool refers to a software tool that is used to send and receive a related mail. The mail tool may be Outlook, Foxmail, and the like. After the interface of the mail tool is invoked, mail information related to the network conference may be read from the mail tool.

Step 205: The TMA acquires the mail information related to the network conference from the mail tool.

Step 206: The TMA returns the mail information to the MPT, where the MPT uses a mail sender and a mail recipient as participants of the conference, and uses a mail title as a conference subject. The user may make a few modifications to the participants and the conference subject, and manually enters a conference start time.

Step 207: The MPT invokes a conference creating interface of the conference reservation server (for example, a meeting portal Meeting Portal) to reserve the conference.

In a creating process, a conference type may further be identified, and the network conference that is initiated based on a mail is identified. An identifier is a conference type identifier, where the conference type identifier may be included in a conference notification. As long as a participant terminal identifies the identifier, the participant terminal may determine that a step of downloading the mail information related to the network conference from the conference reservation server needs to be performed.

It should also be noted that, when the conference creating interface is invoked to create the conference, the MPT may send a URL that stores a related mail to the Meeting Portal for storage. Subsequently, when sending a conference minute, the Meeting Portal may add the URL to the mail.

Step 208: After successfully creating the conference, the Meeting Portal sends a conference notification to all participant terminals by using a mail server.

In this step, a URL used to store the mail information related to the network conference may further be generated. In this embodiment, both related mail information and graphical and text information included in a conference minute mail may be stored in a storage address corresponding to the URL.

Step 209: The Meeting Portal returns the URL to the MPT.

Step 210: The MPT invokes the mail to a conference converting module (Mail to Meeting, MTOM) interface, and converts a format of mail content into a file format supported by software that bears the network conference.

Step 211: The MPT uploads the file that is obtained after the conversion to the storage address indicated by the URL.

In this embodiment, the mail information related to the network conference may be acquired by using the TMA, and the related information in the mail information is determined as a conference subject and a participant address of the network conference. Therefore, an operation of manually entering information such as the conference subject and the participant address by a user may be omitted. The format of the mail content corresponding to the mail information may be converted, by using the MTOM, into the file format supported by the software that bears the network conference, thereby implementing that the mail content is shared and displayed on a participant terminal.

The present application further provides an apparatus for initiating a network conference.

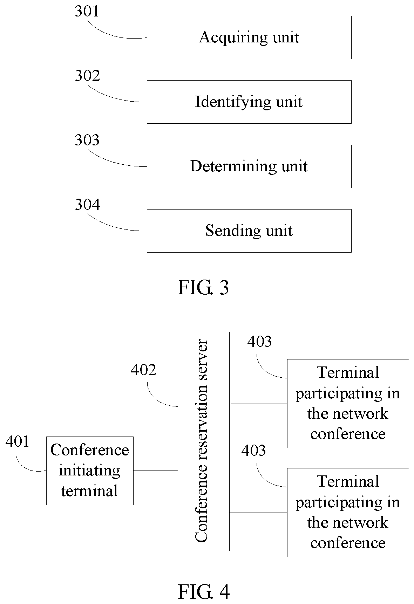

FIG. 3 is a structural diagram of Embodiment 1 of an apparatus for initiating a network conference according to the present application. As shown in FIG. 3, the apparatus may include: an acquiring unit 301, an identifying unit 302, a determining unit 303, and a sending unit 304.

The acquiring unit 301 is configured to acquire mail information related to the network conference.

The network conference in this embodiment of the present application may be initiated for a mail. Information included in the mail related to the network conference may be referred to as mail information related to the network conference.

The mail information related to the network conference may include sender address information, recipient address information, mail title information, mail text information, and the like.

The identifying unit 302 is configured to identify the sender address information, the recipient address information, and the mail title information in the mail information. The determining unit 303 is configured to determine a sender address indicated by the sender address information as a first participant address of the network conference.

There may be multiple participants in the network conference. Generally, a sender of the mail related to the network conference must be included in these participants. Therefore, the sender address indicated by the sender address information may be determined as the first participant address of the network conference. The sender address may be an email box of the sender.

The determining unit 303 is further configured to determine a recipient address indicated by the recipient address information as a second participant address of the network conference.

There may be multiple participants in the network conference. Generally, a recipient of the mail related to the network conference must also be included in these participants. Therefore, the recipient address indicated by the recipient address information may be determined as the second participant address of the network conference. The recipient address may be an email box of the recipient.

The determining unit 303 is further configured to determine a mail title indicated by the mail title information as a conference subject of the network conference.

Because the network conference may be a discussion initiated for a related mail, a title of the related mail may also be used as a conference subject of the network conference. Therefore, the mail title indicated by the mail title information may be determined as the conference subject of the network conference.

The sending unit 304 is configured to send a conference reservation request to a conference reservation server, where the conference reservation request includes the conference subject, the first participant address and the second participant address. The conference reservation request is used to request the conference reservation server to create the network conference and send a conference notification that includes the conference subject to the first participant address and the second participant address.

The conference reservation request may be sent to the conference reservation server. The conference reservation server may send, according to the first participant address and the second participant address, the conference notification to a first terminal corresponding to the first participant address and a second terminal corresponding to the second participant address, so as to notify the first terminal and the second terminal to participate in the network conference.

The conference notification may include the conference subject, and after receiving this conference notification, the first terminal and the second terminal may display the conference subject on a local display unit, to prompt a user for the subject of the conference.

In conclusion, in this embodiment, the sender address indicated by the sender address information is determined as the first participant address of the network conference, the recipient address indicated by the recipient address information is determined as the second participant address of the network conference, and the mail title indicated by the mail title information is determined as the conference subject of the network conference. Therefore, information related to the network conference may be automatically generated, so that an initiator of the network conference does not need to manually enter participant address information and title information of the network conference, thereby improving efficiency of initiating the network conference.

It should be noted that, in the apparatus in this embodiment, after the first participant address and the second participant address are determined, the user may further manually modify a participant address, so as to add an address of another participant that needs to participate in the network conference. After the conference subject is determined, the user may also manually modify the conference subject.

In an actual application, the network conference is initiated for the mail information; therefore, the mail information needs to be shared among participants of the network conference, so that the participants can learn the mail information. In order to share the mail information, the sending unit 304 may further be configured to:
after sending the conference reservation request to the conference reservation server, upload the mail information to the conference reservation server, so that a terminal participating in the network conference acquires the mail information from the conference reservation server.

The sending unit may specifically be configured to:
send a conference reservation request that includes a conference type identifier to the conference reservation server, so that the conference reservation server adds the conference type identifier to the conference notification, and after identifying the conference type identifier, the terminal participating in the network conference performs a step of acquiring the mail information from the conference reservation server.

The conference type identifier is used to indicate that the network conference is initiated based on a mail.

After receiving the conference notification, the terminal participating in the network conference may identify the conference type identifier. As long as the conference type identifier is identified, the terminal participating in the network conference may download the mail information from the server; and the mail information may be displayed on the terminal participating in the network conference. For example, text content of the mail information may be displayed on the participant terminal, so that the participant of the network conference may directly and quickly learn content of the conference.

In an actual application, in order that an attribute of the mail information displayed on the participant terminal is consistent with an attribute of text information in the original mail information, the identifying unit 302 may further be configured to: before the mail information is uploaded to the conference reservation server, identify the text information in the mail information.

The determining unit 303 may further be configured to determine text attribute information of the text information, where the text attribute information includes at least a font type, a font size, a font color, and a text location.

The apparatus may further include:
a first converting unit, configured to convert a format of the text attribute information into a text attribute information format supported by software that bears the network conference.

In an actual application, in order that an attribute of the mail information displayed on the participant terminal is consistent with an attribute of graphical information in the original mail information, the identifying unit 302 may further be configured to: before the mail information is uploaded to the conference reservation server, identify graphical information in the mail information.

The determining unit 303 may further be configured to determine graph attribute information of the graphical information, where the graph attribute information includes at least a graph type, a graph size, and a graph location.

The apparatus may further include:
a second converting unit, configured to convert a format of the graph attribute information into a graph attribute information format supported by software that bears the network conference.

In an actual application, in order to generate a conference minute according to the content of the network conference, so that the content of the network conference can be viewed later, the acquiring unit 301 may further be configured to:
after the conference reservation request is sent to the conference reservation server, acquire graphical and text information from a graph and text shared area in the network conference.

The sending unit 304 may further be configured to upload the graphical and text information to the conference reservation server, so that the conference reservation server sends a conference minute mail to the terminal participating in the network conference, where the conference minute mail includes a storage address of the graphical and text information on the conference reservation server.

The graph and text shared area may also be referred to as a whiteboard. In the network conference, both speech of a participant and text and graphical information displayed in the conference may be displayed in the graph and text shared area.

Therefore, the text and graphical information may be used as the conference minute of the network conference.

It should be noted that, the conference minute mail includes the storage address of the graphical and text information on the server, but not the graphical and text information. A data volume occupied by the storage address is far smaller than a data volume of the graphical and text information. Therefore, sending the conference minute mail that includes the storage address may further reduce a data volume of the conference minute mail, which avoids network congestion caused by transmission of a large volume of data.

In an actual application, a user corresponding to a participant terminal may be absent from the network conference due to a reason. Therefore, sending the conference minute mail to the participant terminal who is absent from the network conference may make the user who is absent from the network conference learn the conference content of the network conference.

In an actual application, the apparatus may further include:
a loading unit, configured to, before the graphical and text information is acquired from the graph and text shared area in the network conference, load the mail information into the graph and text shared area, so that the terminal participating in the network conference modifies, by using an annotation function of the graph and text shared area, mail content corresponding to the mail information.

The present application further provides a system for initiating a network conference.

FIG. 4 is a structural diagram of an embodiment of a system for initiating a network conference according to the present application. As shown in FIG. 4, the system may include a conference initiating terminal 401 and a conference reservation server 402.

The conference initiating terminal 401 is configured to: acquire mail information related to the network conference;
identify sender address information, recipient address information, and mail title information in the mail information;
determine a sender address indicated by the sender address information as a first participant address of the network conference;
determine a recipient address indicated by the recipient address information as a second participant address of the network conference;
determine a mail title indicated by the mail title information as a conference subject of the network conference; and
send a conference reservation request to a conference reservation server, where the conference reservation request includes the conference subject, the first participant address and the second participant address.

The conference reservation server 402 is configured to, after receiving the conference reservation request, create the network conference and send a conference notification that includes the conference subject to the first participant address and the second participant address.

In conclusion, in this embodiment, the sender address indicated by the sender address information is determined as the first participant address of the network conference, the recipient address indicated by the recipient address information is determined as the second participant address of the network conference, and the mail title indicated by the mail title information is determined as the conference subject of the network conference. Therefore, information related to the network conference may be automatically generated, so that an initiator of the network conference does not need to manually enter participant address information and title information of the network conference, thereby improving efficiency of initiating the network conference.

In an actual application, the conference initiating terminal 401 is further configured to, after sending the conference reservation request to the conference reservation server 402, upload the mail information to the conference reservation server 402; and
the system further includes a terminal 403 participating in the network conference, where
the terminal 403 participating in the network conference is configured to acquire the mail information from the conference reservation server 402.

In an actual application, the conference initiating terminal 401 is specifically configured to send a conference reservation request that includes a conference type identifier to the conference reservation server 402, where the conference type identifier is used to indicate that the network conference is initiated based on a mail;
the conference reservation server 402 is further configured to send the conference type identifier to the terminal participating in the network conference; and
the terminal of the network conference is further configured to, after it is determined, according to the conference type identifier, that the network conference is initiated based on a mail, perform a step of acquiring the mail information from the conference reservation server 402.

In an actual application, the conference initiating terminal 401 is further configured to:
after sending the conference reservation request to the conference reservation server 402, acquire graphical and text information from a graph and text shared area in the network conference, and
upload the graphical and text information to the conference reservation server 402; and
the conference reservation server 402 is further configured to send a conference minute mail to the terminal 403 participating in the network conference, where the conference minute mail includes a storage address of the graphical and text information on the conference reservation server 402.

In addition, an embodiment of the present application further provides a computing node, where the computing node may be a host server that has a computing capability, a personal computer PC, a portable computer, a terminal, or the like. Specific implementation of the computing node is not limited in a specific embodiment of the present application.

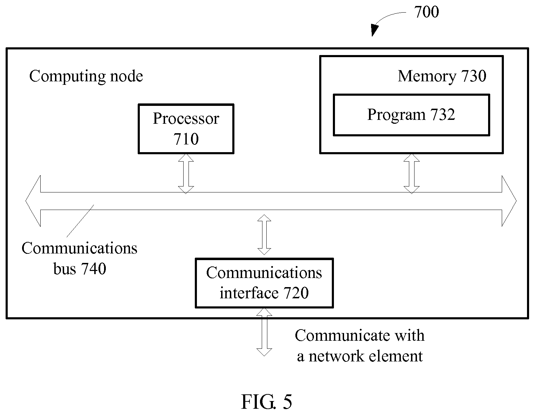

FIG. 5 is a structural diagram of a computing node according to the present application. As shown in FIG. 5, a computing node 700 includes:
a processor (processor) 710, a communications interface (Communications Interface) 720, a memory (memory) 730, and a bus 740.

The processor 710, the communications interface 720, and the memory 730 complete mutual communication by using the bus 740.

The processor 710 is configured to execute a program 732.

Specifically, the program 732 may include program code, where the program code includes a computer operation instruction.

The processor 710 may be a central processing unit CPU, or an application specific integrated circuit ASIC (Application Specific Integrated Circuit), or one or multiple integrated circuits configured to implement the embodiments of the present application.

The memory 730 is configured to store the program 732. The memory 730 may include a high-speed RAM memory, or may include a nonvolatile memory (non-volatile memory), for example, at least one disk memory. The program 732 may specifically includes the corresponding module or unit in the embodiment shown in FIG. 3, and details are not described herein.

Finally, it should be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or an apparatus that includes a list of elements not only includes those elements but also includes other elements that are not expressly listed, or further includes elements inherent to such process, method, article, or apparatus. An element preceded by "includes a..." does not, without more constraints, preclude the existence of additional identical elements in the process, method, article, or apparatus that includes the element.

According to the foregoing descriptions of the embodiments, a person skilled in the art may clearly understand that the present application may be implemented by software in addition to a necessary hardware platform or by hardware only. In most circumstances, the former is a preferred implementation manner. Based on such an understanding, all or a part of the technical solutions of the present application contributing to the technology in the background part may be implemented in a form of a software product. The software product may be stored in a storage medium, such as a ROM/RAM, a magnetic disk, or an optical disc, and includes several instructions for instructing a computer device (which may be a personal computer, a server, or a network device) to perform the methods described in the embodiments or some parts of the embodiments of the present application.

The embodiments in this specification are all described in a progressive manner, each embodiment focuses on a difference from other embodiments, and for same or similar parts in the embodiments, reference may be made to these embodiments. The apparatus disclosed in the embodiment is basically similar to the method disclosed in the embodiment, and therefore is described briefly; for related parts, reference may be made to the description in the method part.

Specific examples are used in this specification to describe the principle and implementation manners of the present application. The foregoing embodiments are merely intended to help understand the method and core idea of the present application. In addition, with respect to the implementation manners and the application scope, modifications may be made by a person of ordinary skill in the art according to the idea of the present application. Therefore, the content of this specification shall not be construed as a limitation to the present application.

## Claims

1. A method for initiating a network conference, comprising:
acquiring (101), by a conference initiating terminal, mail information related to the network conference;
identifying (102), by the conference initiating terminal, sender address information, recipient address information, and mail title information in the mail information;
determining (103), by the conference initiating terminal, a sender address indicated by the sender address information as a first participant address of the network conference;
determining (104), by the conference initiating terminal, a recipient address indicated by the recipient address information as a second participant address of the network conference, wherein the conference initiating terminal is the first participant or the second participant;
determining (105), by the conference initiating terminal, a mail title indicated by the mail title information as a conference subject of the network conference; and
sending (106), by the conference initiating terminal, a conference reservation request to a conference reservation server, wherein the conference reservation request comprises the conference subject, the first participant address and the second participant address, and the conference reservation request is used to request the conference reservation server to create the network conference and send a conference notification that comprises the conference subject to the first participant address and the second participant address;
acquiring, by the conference initiating terminal, graphical and text information from a graph and text shared area in the network conference at the conference initiating terminal, wherein the graphical and text information comprises at least one of speech of a participant, text and image information displayed in the conference; and
uploading, by the conference initiating terminal, the graphical and text information to the conference reservation server, so that the conference reservation server sends a conference minute mail to the first participant and the second participant , wherein the conference minute mail comprises a storage address of the graphical and text information on the conference reservation server.

2. The method according to claim 1, wherein after the sending a conference reservation request to a conference reservation server, the method further comprises:
uploading the mail information to the conference reservation server, so that the first participant or the second participant acquires the mail information from the conference reservation server.

3. The method according to claim 2, wherein the sending a conference reservation request to a conference reservation server specifically comprises:
sending a conference reservation request that comprises a conference type identifier to the conference reservation server, wherein the conference type identifier is used to indicate that the network conference is initiated based on a mail, so that the conference reservation server sends the conference type identifier to the first participant and the second participant, and after the first participant or the second participant determines, according to the conference type identifier, that the network conference is initiated based on a mail, the first participant or the second participant performs a step of acquiring the mail information from the conference reservation server.

4. The method according to claim 2, wherein before the uploading the mail information to the conference reservation server, the method further comprises:
identifying text information in the mail information;
determining text attribute information of the text information, wherein the text attribute information comprises at least a font type, a font size, a font color, and a text location; and
converting a format of the text attribute information into a text attribute information format supported by software that bears the network conference.

5. The method according to claim 2, wherein before the uploading the mail information to the conference reservation server, the method further comprises:
identifying graphical information in the mail information;
determining graph attribute information of the graphical information, wherein the graph attribute information comprises at least a graph type, a graph size, and a graph location; and
converting a format of the graph attribute information into a graph attribute information format supported by software that bears the network conference.

6. The method according to claim 1, wherein before the acquiring graphical and text information from a graph and text shared area in the network conference, the method further comprises:
loading the mail information into the graph and text shared area, so that the first participant or the second participant modifies, by using an annotation function of the graph and text shared area, mail content corresponding to the mail information.

7. An apparatus for initiating a network conference, comprising:
an acquiring unit (301), configured to acquire mail information related to the network conference;
an identifying unit (302), configured to identify sender address information, recipient address information, and mail title information in the mail information;
a determining unit (303), configured to determine a sender address indicated by the sender address information as a first participant address of the network conference;
further configured to determine a recipient address indicated by the recipient address information as a second participant address of the network conference; and
further configured to determine a mail title indicated by the mail title information as a conference subject of the network conference; and
a sending unit (304), configured to send a conference reservation request to a conference reservation server, wherein the conference reservation request comprises the conference subject, the first participant address and the second participant address, and the conference reservation request is used to request the conference reservation server to create the network conference and send a conference notification that comprises the conference subject to the first participant address and the second participant address;
the acquiring unit is further configured to:
acquire graphical and text information from a graph and text shared area in the network conference at the conference initiating terminal, wherein the graphical and text information comprises at least one of speech of a participant, text and image information displayed in the conference; and
the sending unit is further configured to upload the graphical and text information to the conference reservation server, so that the conference reservation server sends a conference minute mail to the first participant and the second participant, wherein the conference minute mail comprises a storage address of the graphical and text information on the conference reservation server.

8. The apparatus according to claim 7, wherein the sending unit is further configured to:
after sending the conference reservation request to the conference reservation server, upload the mail information to the conference reservation server, so that the first participant or the second participant acquires the mail information from the conference reservation server.

9. The apparatus according to claim 8, wherein the sending unit is specifically configured to:
send a conference reservation request that comprises a conference type identifier to the conference reservation server, wherein the conference type identifier is used to indicate that the network conference is initiated based on a mail, so that the conference reservation server sends the conference type identifier to the first participant and the second participant, and after the first participant or the second participant determines, according to the conference type identifier, that the network conference is initiated based on a mail, the first participant or the second participant performs a step of acquiring the mail information from the conference reservation server.

10. The apparatus according to claim 8, wherein the identifying unit is further configured to:
before the mail information is uploaded to the conference reservation server, identify text information in the mail information;
the determining unit is further configured to determine text attribute information of the text information, wherein the text attribute information comprises at least a font type, a font size, a font color, and a text location; and
the apparatus further comprises:
a first converting unit, configured to convert a format of the text attribute information into a text attribute information format supported by software that bears the network conference.

11. The apparatus according to claim 8, wherein the identifying unit is further configured to:
before the mail information is uploaded to a server that is configured to process the network conference, identify graphical information in the mail information;
the determining unit is further configured to determine graph attribute information of the graphical information, wherein the graph attribute information comprises at least a graph type, a graph size, and a graph location; and
the apparatus further comprises:
a second converting unit, configured to convert a format of the graph attribute information into a graph attribute information format supported by software that bears the network conference.

12. The apparatus according to claim 7, further comprising:
a loading unit, configured to, before the graphical and text information is acquired from the graph and text shared area in the network conference, load the mail information into the graph and text shared area, so that the first participant or the second participant modifies, by using an annotation function of the graph and text shared area, mail content corresponding to the mail information.

13. A system for initiating a network conference, comprising a conference initiating terminal and a conference reservation server, wherein
the conference initiating terminal (401) is configured to: acquire mail information related to the network conference,
identify sender address information, recipient address information, and mail title information in the mail information,
determine a sender address indicated by the sender address information as a first participant address of the network conference,
determine a recipient address indicated by the recipient address information as a second participant address of the network conference,
determine a mail title indicated by the mail title information as a conference subject of the network conference, and
send a conference reservation request to a conference reservation server, wherein the conference reservation request comprises the conference subject, the first participant address and the second participant address; and
the conference reservation server (402) is configured to, after receiving the conference reservation request, create the network conference and send a conference notification that comprises the conference subject to the first participant address and the second participant address;
wherein the conference initiating terminal is further configured to:
after sending the conference reservation request to the conference reservation server, acquire graphical and text information from a graph and text shared area in the network conference at the conference initiating terminal, wherein the graphical and text information comprises at least one of speech of a participant, text and image displayed in the conference, and
upload the graphical and text information to the conference reservation server; and
the conference reservation server is further configured to send a conference minute mail to the first participant and the second participant, wherein the conference minute mail comprises a storage address of the graphical and text information on the conference reservation server.

14. The system according to claim 13, wherein the conference initiating terminal is further configured to, after sending the conference reservation request to the conference reservation server, upload the mail information to the conference reservation server; and
the first participant or the second participant is configured to acquire the mail information from the conference reservation server.

15. The system according to claim 14, wherein the conference initiating terminal is specifically configured to send a conference reservation request that comprises a conference type identifier to the conference reservation server, wherein the conference type identifier is used to indicate that the network conference is initiated based on a mail;
the conference reservation server is further configured to send the conference type identifier to the terminal participating in the network conference; and
the terminal of the network conference is further configured to, after it is determined, according to the conference type identifier, that the network conference is initiated based on a mail, perform a step of acquiring the mail information from the conference reservation server.

## Patentansprüche

1. Verfahren zum Einleiten einer Netzwerkkonferenz, umfassend:
Erfassen (101), durch ein die Konferenz einleitendes Endgerät, von zu der Netzwerkkonferenz in Beziehung stehenden Mail-Informationen;
Identifizieren (102), durch das die Konferenz einleitende Endgerät, von Absenderadresseninformationen, Empfängeradresseninformationen und Mailtitel-Informationen in den Mail-Informationen;
Bestimmen (103), durch das die Konferenz einleitende Endgerät, einer durch die Absenderadresseninformationen angegebenen Absenderadresse als eine erste Teilnehmeradresse der Netzwerkkonferenz;
Bestimmen (104), durch das die Konferenz einleitende Endgerät, einer durch die Empfängeradresseninformationen angegebenen Empfängeradresse als eine zweite Teilnehmeradresse der Netzwerkkonferenz, wobei das die Konferenz einleitende Endgerät der erste Teilnehmer oder der zweite Teilnehmer ist;
Bestimmen (105), durch das die Konferenz einleitende Endgerät, eines durch die Mailtitel-Informationen angegebenen Mailtitels als ein Konferenzthema der Netzwerkkonferenz; und
Senden (106), durch das die Konferenz einleitende Endgerät, einer Konferenzreservierungsanforderung an einen Konferenzreservierungsserver, wobei die Konferenzreservierungsanforderung das Konferenzthema, die erste Teilnehmeradresse und die zweite Teilnehmeradresse umfasst und die Konferenzreservierungsanforderung verwendet wird, den Konferenzreservierungsserver aufzufordern, die Netzwerkkonferenz einzurichten und eine Konferenzbenachrichtigung, die das Konferenzthema umfasst, an die erste Teilnehmeradresse und die zweite Teilnehmeradresse zu senden;
Erfassen, durch das die Konferenz einleitende Endgerät, von grafischen und Textinformationen aus einem für Grafik und Text gemeinsam genutzten Bereich in der Netzwerkkonferenz an dem die Konferenz einleitenden Endgerät, wobei die grafischen und Textinformationen mindestens eines von Sprache eines Teilnehmers, in der Konferenz angezeigten Text- und Bildinformationen umfassen; und
Hochladen, durch das die Konferenz einleitende Endgerät, der grafischen und Textinformationen zu dem Konferenzreservierungsserver, so dass der Konferenzreservierungsserver eine Konferenzberichtsmail an den ersten Teilnehmer und den zweiten Teilnehmer sendet, wobei die Konferenzberichtsmail eine Speicheradresse der grafischen und Textinformationen in dem Konferenzreservierungsserver umfasst.

2. Verfahren nach Anspruch 1, wobei, nach dem Senden einer Konferenzreservierungsanforderung an einen Konferenzreservierungsserver, das Verfahren ferner umfasst:
Hochladen der Mail-Informationen zu dem Konferenzreservierungsserver, so dass der erste Teilnehmer oder der zweite Teilnehmer die Mail-Informationen von dem Konferenzreservierungsserver erlangt.

3. Verfahren nach Anspruch 2, wobei das Senden einer Konferenzreservierungsanforderung an einen Konferenzreservierungsserver spezifisch umfasst:
Senden einer Konferenzreservierungsanforderung, die eine Konferenztypkennung umfasst, an den Konferenzreservierungsserver, wobei die Konferenztypkennung verwendet wird, anzugeben, dass die Netzwerkkonferenz basierend auf der Mail eingeleitet wird, so dass der Konferenzreservierungsserver die Konferenztypkennung an den ersten Teilnehmer und den zweiten Teilnehmer sendet, und nachdem der erste Teilnehmer oder der zweite Teilnehmer gemäß der Konferenztypkennung bestimmt, dass die Netzwerkkonferenz basierend auf einer Mail eingeleitet wird, der erste Teilnehmer oder der zweite Teilnehmer einen Schritt des Erfassens der Mail-Informationen von dem Konferenzreservierungsserver durchführt.

4. Verfahren nach Anspruch 2, wobei, vor dem Hochladen der Mail-Informationen zu dem Konferenzreservierungsserver, das Verfahren ferner umfasst:
Identifizieren von Textinformationen in den Mail-Informationen;
Bestimmen von Textattributinformationen der Textinformationen, wobei die Textattributinformationen mindestens einen Schrifttyp, eine Schriftgröße, eine Schriftfarbe und einen Textort umfassen; und
Umwandeln eines Formats der Textattributinformationen in ein Textattributinformationsformat, das von Software, die die Netzwerkkonferenz trägt, unterstützt wird.

5. Verfahren nach Anspruch 2, wobei, vor dem Hochladen der Mail-Informationen zu dem Konferenzreservierungsserver, das Verfahren ferner umfasst:
Identifizieren von grafischen Informationen in den Mail-Informationen;
Bestimmen von Grafikattributinformationen der grafischen Informationen, wobei die Grafikattributinformationen mindestens einen Grafiktyp, eine Grafikgröße und einen Grafikort umfassen; und
Umwandeln eines Formats der Grafikattributinformationen in ein Grafikattributinformationsformat, das von Software, die die Netzwerkkonferenz trägt, unterstützt wird.

6. Verfahren nach Anspruch 1, wobei, vor dem Erfassen von grafischen und Textinformationen aus einem für Grafik und Text gemeinsam genutzten Bereich in der Netzwerkkonferenz, das Verfahren ferner umfasst:
Laden der Mail-Informationen in den für Grafik und Text gemeinsam genutzten Bereich, so dass der erste Teilnehmer oder der zweite Teilnehmer unter Verwendung einer Kommentierungsfunktion des für Grafik und Text gemeinsam genutzten Bereichs den Mail-Inhalt korrespondierend mit den Mail-Informationen modifiziert.

7. Vorrichtung zum Einleiten einer Netzwerkkonferenz, umfassend:
eine Erfassungseinheit (301), konfiguriert zum Erfassen von zu der Netzwerkkonferenz in Beziehung stehenden Mail-Informationen;
eine Identifizierungseinheit (302), konfiguriert zum Identifizieren von Absenderadresseninformationen, Empfängeradresseninformationen und Mailtitel-Informationen in den Mail-Informationen;
eine Bestimmungseinheit (303), konfiguriert zum Bestimmen einer durch die Absenderadresseninformationen angegebenen Absenderadresse als eine erste Teilnehmeradresse der Netzwerkkonferenz;
ferner konfiguriert zum Bestimmen einer durch die Empfängeradresseninformationen angegebenen Empfängeradresse als eine zweite Teilnehmeradresse der Netzwerkkonferenz; und
ferner konfiguriert zum Bestimmen eines durch die Mailtitel-Informationen angegebenen Mailtitels als ein Konferenzthema der Netzwerkkonferenz; und
eine Sendeeinheit (304), konfiguriert zum Senden einer Konferenzreservierungsanforderung an einen Konferenzreservierungsserver, wobei die Konferenzreservierungsanforderung das Konferenzthema, die erste Teilnehmeradresse und die zweite Teilnehmeradresse umfasst und die Konferenzreservierungsanforderung verwendet wird, den Konferenzreservierungsserver aufzufordern, die Netzwerkkonferenz einzurichten und eine Konferenzbenachrichtigung, die das Konferenzthema umfasst, an die erste Teilnehmeradresse und die zweite Teilnehmeradresse zu senden;
wobei die Erfassungseinheit ferner konfiguriert ist zum:
Erfassen von grafischen und Textinformationen aus einem für Grafik und Text gemeinsam genutzten Bereich in der Netzwerkkonferenz an dem die Konferenz einleitenden Endgerät, wobei die grafischen und Textinformationen mindestens eines von Sprache eines Teilnehmers, in der Konferenz angezeigten Text- und Bildinformationen umfassen; und
die Sendeeinheit ferner konfiguriert ist zum Hochladen der grafischen und Textinformationen zu dem Konferenzreservierungsserver, so dass der Konferenzreservierungsserver eine Konferenzberichtsmail an den ersten Teilnehmer und den zweiten Teilnehmer sendet, wobei die Konferenzberichtsmail eine Speicheradresse der grafischen und Textinformationen in dem Konferenzreservierungsserver umfasst.

8. Vorrichtung nach Anspruch 7, wobei die Sendeeinheit ferner konfiguriert ist zum: Hochladen, nach dem Senden der Konferenzreservierungsanforderung an den Konferenzreservierungsserver, der Mail-Informationen zu dem Konferenzreservierungsserver, so dass der erste Teilnehmer oder der zweite Teilnehmer die Mail-Informationen von dem Konferenzreservierungsserver erlangt.

9. Vorrichtung nach Anspruch 8, wobei die Sendeeinheit spezifisch konfiguriert ist zum: Senden einer Konferenzreservierungsanforderung, die eine Konferenztypkennung umfasst, an den Konferenzreservierungsserver, wobei die Konferenztypkennung verwendet wird, anzugeben, dass die Netzwerkkonferenz basierend auf der Mail eingeleitet wird, so dass der Konferenzreservierungsserver die Konferenztypkennung an den ersten Teilnehmer und den zweiten Teilnehmer sendet, und nachdem der erste Teilnehmer oder der zweite Teilnehmer gemäß der Konferenztypkennung bestimmt, dass die Netzwerkkonferenz basierend auf einer Mail eingeleitet wird, der erste Teilnehmer oder der zweite Teilnehmer einen Schritt des Erfassens der Mail-Informationen von dem Konferenzreservierungsserver durchführt.

10. Vorrichtung nach Anspruch 8, wobei die Identifizierungseinheit ferner konfiguriert ist zum:
Identifizieren, bevor die Mail-Informationen zu dem Konferenzreservierungsserver hochgeladen werden, von Textinformationen in den Mail-Informationen;
die Bestimmungseinheit ferner konfiguriert ist zum Bestimmen von Textattributinformationen der Textinformationen, wobei die Textattributinformationen mindestens einen Schrifttyp, eine Schriftgröße, eine Schriftfarbe und einen Textort umfassen; und
wobei die Vorrichtung ferner umfasst:
eine erste Umwandlungseinheit, konfiguriert zum Umwandeln eines Formats der Textattributinformationen in ein Textattributinformationsformat, das von Software, die die Netzwerkkonferenz trägt, unterstützt wird.

11. Vorrichtung nach Anspruch 8, wobei die Identifizierungseinheit ferner konfiguriert ist zum:
Identifizieren, bevor die Mail-Informationen zu einem Server, der konfiguriert ist, die Netzwerkkonferenz zu verarbeiten, hochgeladen werden, von grafischen Informationen in den Mail-Informationen;
wobei die Bestimmungseinheit ferner konfiguriert ist zum Bestimmen von Grafikattributinformationen der grafischen Informationen, wobei die Grafikattributinformationen mindestens einen Grafiktyp, eine Grafikgröße und einen Grafikort umfassen; und
wobei die Vorrichtung ferner umfasst:
eine zweite Umwandlungseinheit, konfiguriert zum Umwandeln eines Formats der Grafikattributinformationen in ein Grafikattributinformationsformat, das von Software, die die Netzwerkkonferenz trägt, unterstützt wird.

12. Vorrichtung nach Anspruch 7, ferner umfassend:
eine Ladeeinheit, konfiguriert zum Laden, bevor die grafischen und Textinformationen aus dem für Grafik und Text gemeinsam genutzten Bereich in der Netzwerkkonferenz erfasst werden, der Mail-Informationen in den für Grafik und Text gemeinsam genutzten Bereich, so dass der erste Teilnehmer oder der zweite Teilnehmer unter Verwendung einer Kommentierungsfunktion des für Grafik und Text gemeinsam genutzten Bereichs den Mail-Inhalt korrespondierend mit den Mail-Informationen modifiziert.

13. System zum Einleiten einer Netzwerkkonferenz, umfassend ein die Konferenz einleitendes Endgerät und einen Konferenzreservierungsserver, wobei
das die Konferenz einleitende Endgerät (401) konfiguriert ist zum: Erfassen von zu der Netzwerkkonferenz in Beziehung stehenden Mail-Informationen,
Identifizieren von Absenderadresseninformationen, Empfängeradresseninformationen und Mailtitel-Informationen in den Mail-Informationen,
Bestimmen einer durch die Absenderadresseninformationen angegebenen Absenderadresse als eine erste Teilnehmeradresse der Netzwerkkonferenz; Bestimmen einer durch die Empfängeradresseninformationen angegebenen Empfängeradresse als eine zweite Teilnehmeradresse der Netzwerkkonferenz, Bestimmen eines durch die Mailtitel-Informationen angegebenen Mailtitels als ein Konferenzthema der Netzwerkkonferenz und
Senden einer Konferenzreservierungsanforderung an einen Konferenzreservierungsserver, wobei die Konferenzreservierungsanforderung das Konferenzthema, die erste Teilnehmeradresse und die zweite Teilnehmeradresse umfasst; und
wobei der Konferenzreservierungsserver (402) konfiguriert ist zum Einrichten, nach Empfangen der Konferenzreservierungsanforderung, der Netzwerkkonferenz und Senden einer Konferenzbenachrichtigung, die das Konferenzthema umfasst, an die erste Teilnehmeradresse und die zweite Teilnehmeradresse;
wobei das die Konferenz einleitende Endgerät ferner konfiguriert ist zum:
Erfassen, nach dem Senden der Konferenzreservierungsanforderung an den Konferenzreservierungsserver, von grafischen und Textinformationen aus einem für Grafik und Text gemeinsam genutzten Bereich in der Netzwerkkonferenz an dem die Konferenz einleitenden Endgerät, wobei die grafischen und Textinformationen mindestens eines von Sprache eines Teilnehmers, in der Konferenz angezeigten Text- und Bildinformationen umfassen; und
Hochladen der grafischen und Textinformationen zu dem Konferenzreservierungsserver; und
wobei der Konferenzreservierungsserver ferner konfiguriert ist zum Senden einer Konferenzberichtsmail an den ersten Teilnehmer und den zweiten Teilnehmer, wobei die Konferenzberichtsmail eine Speicheradresse der grafischen und Textinformationen in dem Konferenzreservierungsserver umfasst.

14. System nach Anspruch 13, wobei das die Konferenz einleitende Endgerät ferner konfiguriert ist zum Hochladen, nach dem Senden der Konferenzreservierungsanforderung an den Konferenzreservierungsserver, der Mail-Informationen an den Konferenzreservierungsserver; und
der erste Teilnehmer oder der zweite Teilnehmer konfiguriert ist zum Erfassen der Mail-Informationen von dem Konferenzreservierungsserver.

15. System nach Anspruch 14, wobei das die Konferenz einleitende Endgerät spezifisch konfiguriert ist zum Senden einer Konferenzreservierungsanforderung, die eine Konferenztypkennung umfasst, an den Konferenzreservierungsserver, wobei die Konferenztypkennung verwendet wird, anzugeben, dass die Netzwerkkonferenz basierend auf einer Mail eingeleitet wird;
der Konferenzreservierungsserver ferner konfiguriert ist zum Senden der Konferenztypkennung an das Endgerät, das an der Netzwerkkonferenz teilnimmt; und das Endgerät der Netzwerkkonferenz ferner konfiguriert ist zum Durchführen, nachdem gemäß der Konferenztypkennung bestimmt wird, dass die Netzwerkkonferenz basierend auf einer Mail eingeleitet wird, eines Schritts zum Erfassen der Mail-Informationen von dem Konferenzreservierungsserver.

## Revendications

1. Procédé permettant d'initier une conférence en réseau, comprenant les étapes suivantes
acquérir (101), par un terminal d'initiation de conférence, des informations de courrier électronique associées à la conférence en réseau ;
identifier (102), par le terminal d'initiation de conférence, des informations d'adresse d'expéditeur, des informations d'adresse de destinataire, et des informations de titre de courrier électronique dans les informations de courrier électronique ;
déterminer (103), par le terminal d'initiation de conférence, une adresse d'expéditeur indiquée par les informations d'adresse d'expéditeur comme une adresse de premier participant de la conférence en réseau ;
déterminer (104), par le terminal d'initiation de conférence, une adresse de destinataire indiquée par les informations d'adresse de destinataire comme une adresse de deuxième participant de la conférence en réseau, le terminal d'initiation de conférence étant le premier participant ou le deuxième participant ;
déterminer (105), par le terminal d'initiation de conférence, un titre de courrier électronique indiqué par les informations de titre de courrier électronique comme un sujet de conférence de la conférence en réseau ; et
envoyer (106), par le terminal d'initiation de conférence, une requête de réservation de conférence à un serveur de réservation de conférence, la requête de réservation de conférence comportant le sujet de la conférence, l'adresse du premier participant et l'adresse du deuxième participant, et la requête de réservation de conférence étant utilisée pour demander au serveur de réservation de conférence de créer la conférence en réseau et d'envoyer une notification de conférence qui comprend le sujet de la conférence à l'adresse du premier participant et à l'adresse du deuxième participant ;
acquérir, par le terminal d'initiation de conférence, des informations graphiques et texte à partir d'une zone partagée en graphe et texte dans la conférence en réseau au niveau du terminal d'initiation de conférence, les informations graphiques et texte comportant au moins un élément parmi l'exposé d'un participant, des informations texte et image affichées dans la conférence ; et
télécharger, par le terminal d'initiation de conférence, les informations graphiques et texte vers le serveur de réservation de conférence, afin que le serveur de réservation de conférence envoie un courrier électronique de minute de conférence au premier participant et au deuxième participant, le courrier électronique de minute de conférence contenant une adresse de stockage des informations graphiques et texte sur le serveur de réservation de conférence.

2. Procédé selon la revendication 1, dans lequel, après l'étape d'envoi d'une requête de réservation de conférence à un serveur de réservation de conférence, le procédé comprend en outre :
télécharger les informations de courrier électronique vers le serveur de réservation de conférence, afin que le premier participant ou le deuxième participant acquière les informations de courrier électronique à partir du serveur de réservation de conférence.

3. Procédé selon la revendication 2, dans lequel l'étape d'envoi d'une requête de réservation de conférence à un serveur de réservation de conférence comprend spécifiquement :
envoyer une requête de réservation de conférence qui comporte un identifiant de type de conférence au serveur de réservation de conférence, l'identifiant de type de conférence étant utilisé pour indiquer que la conférence en réseau est initiée sur la base d'un courrier électronique, afin que le serveur de réservation de conférence envoie l'identifiant de type de conférence au premier participant et au deuxième participant, et après que le premier participant ou le deuxième participant a déterminé, selon l'identifiant de type de conférence, que la conférence en réseau est initiée sur la base d'un courrier électronique, le premier participant ou le deuxième participant exécute une étape consistant à acquérir les informations de courrier électronique à partir du serveur de réservation de conférence.

4. Procédé selon la revendication 2, dans lequel, avant l'étape de téléchargement des informations de courrier électronique vers le serveur de réservation de conférence, le procédé comprend en outre :
identifier des informations texte dans les informations de courrier électronique ;
déterminer des informations d'attribut de texte des informations texte, les informations d'attribut de texte comportant au moins un type de police de caractères, une taille de police de caractères, une couleur de police de caractères, et un emplacement de texte ; et
convertir un format des informations d'attribut de texte en un format d'informations d'attribut de texte pris en charge par un logiciel qui permet la conférence en réseau.

5. Procédé selon la revendication 2, dans lequel, avant l'étape de téléchargement des informations de courrier électronique vers le serveur de réservation de conférence, le procédé comprend en outre :
identifier des informations graphiques dans les informations de courrier électronique ; déterminer des informations d'attribut de graphe des informations graphiques, les informations d'attribut de graphe comportant au moins un type de graphe, une taille de graphe, et un emplacement de graphe ; et
convertir un format des informations d'attribut de graphe en un format d'informations d'attribut de graphe pris en charge par un logiciel qui permet la conférence en réseau.

6. Procédé selon la revendication 1, dans lequel, avant l'étape d'acquisition des informations graphiques et texte à partir d'une zone partagée graphe et texte dans la conférence en réseau, le procédé comprend en outre :
charger les informations de courrier électronique dans la zone partagée graphe et texte, afin que le premier participant ou le deuxième participant modifie, en utilisant une fonction d'annotation de la zone partagée en graphe et texte, un contenu de courrier électronique correspondant aux informations de courrier électronique.

7. Appareil permettant d'initier une conférence en réseau, comprenant :
une unité d'acquisition (301), configurée pour acquérir des informations de courrier électronique associées à la conférence en réseau ;
une unité d'identification (302), configurée pour identifier des informations d'adresse d'expéditeur, des informations d'adresse de destinataire, et des informations de titre de courrier électronique dans les informations de courrier électronique ;
une unité de détermination (303), configurée pour déterminer une adresse d'expéditeur indiquée par les informations d'adresse d'expéditeur comme une adresse de premier participant de la conférence en réseau ;
configurée en outre pour déterminer une adresse de destinataire indiquée par les informations d'adresse de destinataire comme une adresse de deuxième participant de la conférence en réseau ; et
configurée en outre pour déterminer un titre de courrier électronique indiqué par les informations de titre de courrier électronique comme un sujet de conférence de la conférence en réseau ; et
une unité d'envoi (304), configurée pour envoyer une requête de réservation de conférence à un serveur de réservation de conférence, la requête de réservation de conférence comportant le sujet de la conférence, l'adresse du premier participant et l'adresse du deuxième participant, et la requête de réservation de conférence étant utilisée pour demander au serveur de réservation de conférence de créer la conférence en réseau et d'envoyer une notification de conférence qui comprend le sujet de la conférence à l'adresse du premier participant et à l'adresse du deuxième participant ;
l'unité d'acquisition est en outre configurée pour :
acquérir des informations graphiques et texte à partir d'une zone partagée en graphe et texte dans la conférence en réseau au niveau du terminal d'initiation de conférence, les informations graphiques et texte comportant au moins un élément parmi l'exposé d'un participant, des informations texte et image affichées dans la conférence ; et
l'unité d'envoi est en outre configurée pour télécharger les informations graphiques et texte vers le serveur de réservation de conférence, afin que le serveur de réservation de conférence envoie un courrier électronique de minute de conférence au premier participant et au deuxième participant, le courrier électronique de minute de conférence contenant une adresse de stockage des informations graphiques et texte sur le serveur de réservation de conférence.

8. Appareil selon la revendication 7, dans lequel l'unité d'envoi est en outre configurée pour :
après avoir envoyé la requête de réservation de conférence au serveur de réservation de conférence, télécharger les informations de courrier électronique vers le serveur de réservation de conférence, afin que le premier participant ou le deuxième participant acquière les informations de courrier électronique à partir du serveur de réservation de conférence.

9. Appareil selon la revendication 8, dans lequel l'unité d'envoi est configurée spécifiquement pour :
envoyer une requête de réservation de conférence qui comporte un identifiant de type de conférence au serveur de réservation de conférence, l'identifiant de type de conférence étant utilisé pour indiquer que la conférence en réseau est initiée sur la base d'un courrier électronique, afin que le serveur de réservation de conférence envoie l'identifiant de type de conférence au premier participant et au deuxième participant, et après que le premier participant ou le deuxième participant a déterminé, selon l'identifiant de type de conférence, que la conférence en réseau est initiée sur la base d'un courrier électronique, le premier participant ou le deuxième participant exécute une étape consistant à acquérir les informations de courrier électronique à partir du serveur de réservation de conférence.

10. Appareil selon la revendication 8, dans lequel l'unité d'identification est en outre configurée pour :
avant que les informations de courrier électronique n'aient été téléchargées vers le serveur de réservation de conférence, identifier des informations texte dans les informations de courrier électronique ;
l'unité de détermination est en outre configurée pour déterminer des informations d'attribut de texte des informations texte, les informations d'attribut de texte comportant au moins un type de police de caractères, une taille de police de caractères, une couleur de police de caractères, et un emplacement de texte ; et
l'appareil comprend en outre :
une première unité de conversion, configurée pour convertir un format des informations d'attribut de texte en un format d'informations d'attribut de texte pris en charge par un logiciel qui permet la conférence en réseau.

11. Appareil selon la revendication 8, dans lequel l'unité d'identification est en outre configurée pour :
avant que les informations de courrier électronique n'aient été téléchargées vers un serveur qui est configuré pour traiter la conférence en réseau, identifier des informations graphiques dans les informations de courrier électronique ;
l'unité de détermination est en outre configurée pour déterminer des informations d'attribut de graphe des informations graphiques, les informations d'attribut de graphe comportant au moins un type de graphe, une taille de graphe, et un emplacement de graphe ; et
l'appareil comprend en outre :
une deuxième unité de conversion, configurée pour convertir un format des informations d'attribut de graphe en un format d'informations d'attribut de graphe pris en charge par un logiciel qui permet la conférence en réseau.

12. Appareil selon la revendication 7, comprenant en outre :
une unité de chargement, configurée pour, avant que les informations graphiques et texte n'aient été acquises à partir de la zone partagée graphe et texte dans la conférence en réseau, charger les informations de courrier électronique dans la zone partagée graphe et texte, afin que le premier participant ou le deuxième participant modifie, en utilisant une fonction d'annotation de la zone partagée en graphe et texte, un contenu de courrier électronique correspondant aux informations de courrier électronique.

13. Système permettant d'initier une conférence en réseau, comprenant un terminal d'initiation de conférence et un serveur de réservation de conférence, dans lequel :
le terminal d'initiation de conférence (401) est configuré pour : acquérir des informations de courrier électronique associées à la conférence en réseau,
identifier des informations d'adresse d'expéditeur, des informations d'adresse de destinataire, et des informations de titre de courrier électronique dans les informations de courrier électronique,
déterminer une adresse d'expéditeur indiquée par les informations d'adresse d'expéditeur comme une adresse de premier participant de la conférence en réseau, déterminer une adresse de destinataire indiquée par les informations d'adresse de destinataire comme une adresse de deuxième participant de la conférence en réseau, déterminer un titre de courrier électronique indiqué par les informations de titre de courrier électronique comme un sujet de conférence de la conférence en réseau, et envoyer une requête de réservation de conférence à un serveur de réservation de conférence, la requête de réservation de conférence comportant le sujet de la conférence, l'adresse du premier participant et l'adresse du deuxième participant ; et
le serveur de réservation de conférence (402) est configuré pour, après avoir reçu la requête de réservation de conférence, créer la conférence en réseau et envoyer une notification de conférence qui comprend le sujet de la conférence à l'adresse du premier participant et à l'adresse du deuxième participant ;
le terminal d'initiation de conférence étant en outre configuré pour :
après avoir envoyé la requête de réservation de conférence au serveur de réservation de conférence, acquérir des informations graphiques et texte à partir d'une zone partagée en graphe et texte dans la conférence en réseau au niveau du terminal d'initiation de conférence, les informations graphiques et texte comportant au moins un élément parmi l'exposé d'un participant, des informations texte et image affichées dans la conférence, et
télécharger les informations graphiques et texte vers le serveur de réservation de conférence ; et
le serveur de réservation de conférence est en outre configuré pour envoyer un courrier électronique de minute de conférence au premier participant et au deuxième participant, le courrier électronique de minute de conférence contenant une adresse de stockage des informations graphiques et texte sur le serveur de réservation de conférence.

14. Système selon la revendication 13, dans lequel le terminal d'initiation de conférence est en outre configuré pour, après avoir envoyé la requête de réservation de conférence au serveur de réservation de conférence, télécharger les informations de courrier électronique vers le serveur de réservation de conférence ; et
le premier participant ou le deuxième participant est configuré pour acquérir les informations de courrier électronique à partir du serveur de réservation de conférence.

15. Système selon la revendication 14, dans lequel le terminal d'initiation de conférence est configuré spécifiquement pour envoyer une requête de réservation de conférence qui comporte un identifiant de type de conférence au serveur de réservation de conférence, l'identifiant de type de conférence étant utilisé pour indiquer que la conférence en réseau est initiée sur la base d'un courrier électronique ;
le serveur de réservation de conférence est en outre configuré pour envoyer l'identifiant de type de conférence au terminal participant à la conférence en réseau ; et
le terminal de la conférence en réseau est en outre configuré pour, après qu'il a été déterminé, selon l'identifiant de type de conférence, que la conférence en réseau est initiée sur la base d'un courrier électronique, exécuter une étape consistant à acquérir les informations de courrier électronique à partir du serveur de réservation de conférence.
